(19) Europäisches Patentamt
European Patent Office
Office européen des brevets

(11) **EP 3 705 083 B1**

(12) **EUROPEAN PATENT SPECIFICATION**

(45) Date of publication and mention
of the grant of the patent:
**24.03.2021 Bulletin 2021/12**

(51) Int Cl.:
***A61C 17/18*** *(2006.01)*      ***A61C 17/20*** *(2006.01)*
***A61C 3/03*** *(2006.01)*

(21) Application number: **19161409.8**

(22) Date of filing: **07.03.2019**

(54) **TIP ELEMENT FOR AN ULTRASONIC DENTAL TREATMENT DEVICE, MOTION TRANSFORMATION SECTION OF SUCH A DENTAL TREATMENT DEVICE, DENTAL TREATMENT DEVICE HAVING SUCH A TIP ELEMENT AND CARD DEVICE FOR CHECKING SUCH A TIP ELEMENT**

SPITZENELEMENT FÜR EINE ULTRASCHALLZAHNBEHANDLUNGSVORRICHTUNG, BEWEGUNGSUMWANDLUNGSABSCHNITT SOLCH EINER ZAHNBEHANDLUNGSVORRICHTUNG, ZAHNBEHANDLUNGSVORRICHTUNG MIT SOLCH EINEM SPITZENELEMENT UND KARTENVORRICHTUNG ZUM PRÜFEN EINES SOLCHEN SPITZENELEMENTS

ÉLÉMENT D'EXTRÉMITÉ POUR UN DISPOSITIF DE TRAITEMENT DENTAIRE À ULTRASONS, SECTION DE TRANSFORMATION DE MOUVEMENT D'UN TEL DISPOSITIF DE TRAITEMENT DENTAIRE, DISPOSITIF DE TRAITEMENT DENTAIRE DOTÉ D'UN TEL ÉLÉMENT D'EXTRÉMITÉ ET CARTE POUR CONTRÔLER UN TEL ÉLÉMENT D'EXTRÉMITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.09.2020 Bulletin 2020/37**

(73) Proprietor: **Ferton Holding S.A.**
**2800 Delémont (CH)**

(72) Inventors:
• **Vuillet, Romain**
  **39400 Bellefontaine (FR)**

• **Bienaimé, Alex**
  **39220 Les Rousses (FR)**

(74) Representative: **Müller Schupfner & Partner**
**Patent- und Rechtsanwaltspartnerschaft mbB**
**Bavariaring 11**
**80336 München (DE)**

(56) References cited:
**CN-U- 204 909 697      US-A- 5 899 693**
**US-A1- 2015 245 884      US-A1- 2016 081 764**
**US-A1- 2018 140 403**

EP 3 705 083 B1

**Description**

The present invention concerns a tip element for an ultrasonic dental treatment device, a motion transformation section of such a dental treatment device, a dental treatment device having such a tip element and a tip card device for such a tip element.

Dental calculus develops mostly in mouth areas that are difficult to access, in particular during home care treatments like a toothbrush or a water spray treatment. These areas are also difficult to access during a professional care treatment, especially during scaling, and calculi formed are hard and strongly attached to the teeth.

Ultrasonic scaling instruments are well known to efficiently remove hard calculus due to their power of ultrasonic vibrations and a low impact on teeth. A removal capacity of the ultrasonic scaling instrument is achieved by their ultrasonic vibrational power, which can be approximated to be proportional to an amplitude, i.e. a vibration amplitude, for a given stiffness of the tip element. Thereby, the amplitude needs to be optimized when determining a geometry of the tip element to ensure its efficiency, in a limit of an instrument resistance.

A low invasiveness of the tip element is ensured by a controlled ultrasonic vibration in one-dimensional or translation direction. The calculus is kicked, not cut, due to a force of the ultrasonic motion, having a low amplitude, but a high speed and a high acceleration due to a high frequency of the ultrasonic motion. This ensures a low contact force between teeth and instrument.

For kicking the calculus with low or no impact on teeth, a characteristic planar flexural motion of the tip element must be perfectly tangential to a teeth surface. For areas, which are difficult to access, particularly for mesial and distal access of molar and premolar teeth, it gets harder to guarantee the tangential positioning of the tip element with traditional straight tip elements.

To properly remove calculus in these areas, it turned out that the tip element has to be tilted to a certain angle, preferably to 35°. However, these instruments are known for having a low efficiency and it further turned out that the vibrational motion could not be properly controlled. For example, the actual amplitude is less than 30 $\mu$m at full motion, and a planar flexural motion could not be ensured. Especially due to its specific geometry, no ultrasonic vibration could be sent to the dental calculus to remove it.

Other solutions, including for example a different angle for the planar motion, could not ensure proper rerouting of the vibration motion. Solutions that ensure a proper rerouting of the vibration motion, in turn, could not guarantee a proper alignment of the tip element relative to the teeth, increasing the risk of teeth damages.

Further, DE 42 38 384 C1 concerns a motion transformation that transforms a first linear vibration to another second linear vibration being perpendicular to the previous one. It uses a radial mode of vibration, which re-orientates the vibration without any amplification.

Thereby, the system of DE 42 38 384 C1 is not intended for scaling, but for instruments having a low amplitude and a low efficiency. Further, the element realizing the motion transformation is arranged between the hand piece and the tip element being reversibly attachable.

It is an object of the present invention to provide an improved tip element, which performs an ultrasonic vibration during its utilization, in particular with respect to its efficiency, its control of the motion along a tilted direction and its low invasiveness.

US 2016 0 081 764 A1 discloses an ultrasonic tip for ultrasonic instruments, and further provides a method of dental treatment of peri-implantitis using an ultrasonic tip operable to cooperate with an ultrasonic instrument to transmit ultrasonic vibrations to a surface of a dental implant to be treated, said implant and said ultrasonic tip being made of titanium.

CN 204 909 697 U discloses a tip having a ball-like end section.

US 2015 245 884 A1 concerns a lighted dental instruments and, more particularly, powered dental scalers incorporating both an integral light source and a fluid passageway that directs fluid adjacent to tooth surfaces with which the scalers are in contact.

US 5 899 693 A discloses a disposable dental tip incorporated in an ultrasonic scaler and a dental working distal end piece used for the dental tip.

US 2018 140 403 A1 concerns a moulded gauge used for both manual and automated inspection of the length of at least one ultrasonic scaler tip.

This object is achieved by the tip element according to claim 1, a motion transformation section according to claim 13, a dental treatment device according to claims 14 and a tip card device according to claim 15. Preferred embodiments are incorporated in the dependent claims, the description and the figures.

According to a first aspect of the present invention a tip element for a dental treatment device, in particular a scaler, is provided, wherein the tip element performs an ultrasonic vibration during its utilization, comprising

- a first end section for reversibly attaching the tip element to a hand piece,
- a second end section forming a dental tool wherein the second end section tapers to a pointed end and
- a motion transformation section arranged between the first end section and the second end section, wherein, for transforming an ultrasonic vibration having a first vibration direction to an ultrasonic vibration having a second vibration direction, the motion transformation section has a first bended subsection and a second bended subsection,
  wherein a course of the tip element is bended
- about a first angle in the first bended subsection and
- about a second angle in the second bended subsection,
  wherein a difference between the first angle and the second angle is smaller than 15°,
characterized in that the first angle and/or the second angle are between 85° and 125°.

The first end section forms a proximal end and the second end section forms a distal end of the tip element.

Contrary to the state of the art, the tip element according to the present invention includes a motion transformation section having a first bended subsection and a second bended subsection for transforming an ultrasonic vibration, having a second vibration direction, i. e. the tip element is at least double bended in the motion transformation section as defined in claim 1. Due to the motion transformation section it is advantageously possible to block at least a part of a forward and backward movement of the tip element, i. e. an ultrasonic vibration having a first direction, in particular at its first end section, and to transform this forward and backward movement at least partially to an up-and-down movement, i. e. an ultrasonic vibration having a second direction, at the end of the motion transformation section. For example, the forward and backward movement is performed parallel to a longitudinal direction and the up- and down-movement is directed perpendicularly to the forward and backward movement.

Furthermore, it is advantageously possible to fine tune an amplitude of the ultrasonic vibration, in particular at the end of the motion transformation section. This allows adapting the efficiency for properly removing calculus. It further turned out that the control of the motion transformation by the motion transformation section can be applied to different forms of the second end section, in particular to those that are designed for removing calculus in areas, being hard to access. Thereby, a controlled motion of the second end section, in particular in one certain plane, can be advantageously used to avoid hammering against the tooth during its utilization.

Preferably, it is provided that the tip element is reversibly attachable to a hand piece including an activator unit that induces the ultrasonic vibration to the tip element, in particular to the first end section of the tip element. For example, the activator unit comprises a piezo transducer. Furthermore, in order to ensure continuity of the ultrasonic vibration between the hand piece (which includes the piezo-transducer) and the tip element, the hand piece and the tip element have an interface, preferably at a front side of the hand piece and the first (proximal) end section, for inserting the tip element to a corresponding recess of the hand piece. For example, the first end section of the tip element can be screwed to the hand piece or the hand piece and the first end section are configured to form a key lock principle mechanism. Preferably, the first end section of the tip element is screwed to the hand piece

Especially, the activation unit induces an ultrasonic vibration having the first vibration direction in the first end section, wherein the first vibration direction is parallel to a longitudinal direction of the hand piece, usually initiated by piezo transducer which is stacked longitudinally inside the actuator of the hand piece. The second end section particularly tapers to a pointed end that is in contact with the tooth during its utilization. To avoid damages at the tooth, it is preferably provided that the tip element, in particular the second (distal) end section of the tip element, has smooth edges. Preferably, the cross section of the tip element in the first end section is bigger than a cross section of the tip element in the second end section.

In particular, the tip element is a single piece, i. e. the tip element is constructed integrally. Especially, the first end section merges into the motion transformation section and/or the motion transformation section merges into the second end section. Further, it is provided that the second end section is configured to perform a planar flexural motion, in particular at its pointed end. "Planar" means that the movement is performed in a single plane, i.e. a two dimensional plane, without having a movement component perpendicular to that plane.

According to the present invention, it is provided that a course of the tip element is bended

- about a first angle in the first bended subsection and
- about a second angle in the second bended subsection, wherein a difference between the first angle and the second angle is smaller than 15°, more preferably smaller than 5° and most preferably smaller than 2°. In particular, the first bended subsection and the second bended subsection are bended in directions being opposite to each other but in the same plane. It is therefore conceivable that the first bended subsection and the second bended subsection form a plane, preferably without any torsion. Preferably, the first angle and the second angle are formed to be as equal to each other as possible for realizing a parallel lateral shift of the course of the tip element between the course of the tip element in front of the motion transformation section and the course of the tip element behind the motion transformation section. Preferably, the motion transformation section is specified by a course of the tip element, being not parallel to the first vibration direction and/or the longitudinal direction of the hand piece. The motion transformation section preferably has the shape of an "S".

According to the present invention, it is provided that the first angle and/or the second angle are between 85° and 125° and more probably between 90° and 100° or even mainly 90°. By choosing the first angle as close as possible to 90°, it is advantageously possible to almost block the whole ultrasonic vibration having the first vibration direction and transfer an energy mainly completely to the vibration having the second vibration direction at the ending of the motion transformation section.

Particularly, it is provided that a first radius of curvature $R\alpha 1$, satisfying

$$\frac{D1}{2} < R\alpha1 < 2 \cdot D1,$$

is assigned to the first bended subsection, wherein $D1$ is in the range between 1.2 and 4 mm. The second radius of curvature $R\alpha2$, assigned to the second bended subsection, is determined by the lengths $L1$ and $L2$ and by the angle $\alpha1$.

In particular, it is provided that the motion transformation section has a first length and the course of the tip element in the motion transformation section causes a lateral shift having a second length, wherein the first length is longer than the second length. By choosing the first length longer than the second length, it is advantageously possible to amplify the amplitude of the ultrasonic vibration, in particular of the ultrasonic vibration at the pointed end of the second end section. Preferably, the first and the second length are dimensioned to form an elliptic resonator, wherein the first length forms a large axis and the second length forms a short axis of the elliptic resonator.

Preferably, the first length and/or the second length is/are in a range between 3 to 8 mm. Thus, the first length and second length are dimensioned for transferring the ultrasonic vibration, having the first vibration direction, to the ultrasonic vibration, having the second vibration direction. Simultaneously, the first length and the second length are small enough for a simple handling of the tip element being attached to the hand piece.

Furthermore, it is particularly provided that the first length is equal to or longer than the second length and/or the first cross-section area is equal to or larger than the second cross-section area. Thus, it is possible to tune the amplitude, for example by modifying the ratio of the first and the second length and/or the first cross-section and the second cross-section area correspondingly.

Furthermore, it is particularly provided that the tip element has a core region and a cover region, wherein the cover region surrounds the core region, wherein along the course of the tip element the cover region modifies its extension in a direction perpendicular to the course of the tip element, in particular in the motion transformation section. Thus, another possibility for adapting the amplitude at the pointed end of the tip element is provided by adapting the size of the cover region. Preferably, the core region and the cover region are concentric to each other. Preferably, the modification of the size of the cover region is realized within the motion transfer section. The core region is preferably cylindrical and forms a channel for transporting a liquid stream, preferably water.

Preferably, it is provided that in the motion transformation section the cover region has a first cross-section area in a first cross section perpendicular to the course of the tip element, in particular measured at a beginning of the motion transformation section, and/or a second cross-section area in a second cross section perpendicular to the course of the tip element in the motion transformation section, in particular measured at an ending of the motion transformation section, wherein the first cross-section area is bigger than the second cross-section area. The size of the core region remains constant. Especially for the first cross-section area being bigger than the second cross-section area it is advantageously possible to amplify the amplitude of the ultrasonic vibration at the pointed end of the second end section. Actually, it turned out that an amplitude of 215 um at full power (when water is passing through the core region,) could be reached, in particular if the size modification has been combined with the elliptic resonator formed with the first length being bigger than the second length. For comparison, the same type of tip element without motion transformation section, having a first bended subsection and a second bended subsection, provides an amplitude of 60 $\mu$m under the same condition. Consequently, it is possible to amplify the amplitude by at least a factor of 2.5 by adapting the motion transformation section correspondingly.

Preferably, the cover region has a conical, stepped and/or exponential shape along the course of the tip element, in particular in the motion transformation section. Advantageously, it is possible to adapt the amplitude of the ultrasonic vibration at the pointed end of the tip element by adapting the shape of the cover region along the course of the tip element.

Further, it is preferably provided that preferably in the second end section the course of the tip element is bended in a tilted direction about a third angle relative to a main plane including the first bended subsection and the second bended subsection, wherein the third angle is between -75° and +75°, preferable between -35° and 35° or about 0°. Especially, a third angle and/or a third radius of curvature is adapted depending on its planned application. For example, for a straight tip element the third angle is 0°. For curved instruments, preferred for mesial and distal treatment of molar or premolar teeth, the third angle is adapted to an area to be treated. For example, the range of the third angle is between -75° and 75° depending on the mouth quadrant. For -35° and 35° as third angle, access to areas otherwise hard to access for a tip element is simplified.

In one embodiment, it is provided that in the second end section the course of the tip element is bended about a fourth angle in a plane including a part of the second end section, extending in the tilted direction. This is particularly useful for dental applications. In particular, the second end section is bended such that the second end section defines a plane, in particular tilted about the third angle. During its utilization, the pointed end performs its ultrasonic vibration in said plane to remove the calculus from the teeth. Thereby, the second end section, in particular its pointed end, performs a planar flexural motion, for example a motion tangential to the tooth surface. Advantageously, the geometry of the motion transformation section ensures that the pointed tip performs no additional movement out of said plane that would otherwise hammer the tooth and might cause damages.

Another aspect of the present invention is a motion transformation section, as defined in claim 13, for a tip element according to one of the preceding claims. All features and benefits described above for the tip element can be applied to the motion transformation section analogously and vice versa. It is even considerable that the first end section, the second end section and/or the transformation section can be put together to form the desired tip element. For example, the transformation section and the second end section provides an interface to reversibly attach the second end section to the motion transformation section. Thus, it is possible to interchange the second end region and for example change the third angle and/or the fourth angle by using another differently bended second end section.

Furthermore, the present invention concerns a dental treatment device having a tip element according to the present invention. All features and benefits described in the context of the tip element apply analogously to the dental treatment device and vice versa. Preferably, the dental treatment device comprises an activator unit for inducing a linear ultrasonic vibration to the tip element, especially to a tip element being reversibly attachable to the activator unit. In particular, the tip element is screwed to the dental treatment device at its front side.

Another aspect of the present invention concerns a tip card device, as defined in claim 15, for checking a status of a tip element according to the present invention, comprising a holding element for arranging the tip element in a fixed orientation relative to a projection area. Said card being configured to check whether the transformation section, and eventually the second end section, has been deformed during its utilization and the user is informed whether he needs to replace the tip element. Thereby, the holding element is configured such that the tip element can be checked from different perspectives, for example by transferring the tip element into a certain orientation that allows checking the geometry of the tip element on the same projection area. It is also thinkable that the projection area forms a box, in particular an open box or a transparent box, which allows to check the geometry of the tip element from different perspectives. All features and benefits described in the context of the tip element apply analogously to the tip card device and vice versa.

Wherever not already described explicitly, individual embodiments or their individual aspects and features in the description can be combined or exchanged with one another however the scope of the present invention is defined by the wording of the claims. Advantages which are described with respect to one embodiment of the present invention are, wherever applicable, also advantageous of other embodiments of the present invention.

In the drawings:

Fig. 1    schematically shows a tip element according to a preferred embodiment in a first perspective view,

Fig.2    schematically shows the tip element of figure 1 in a second perspective view

Fig.3    schematically shows a second end section of the tip element shown in the figures 1 and 2.

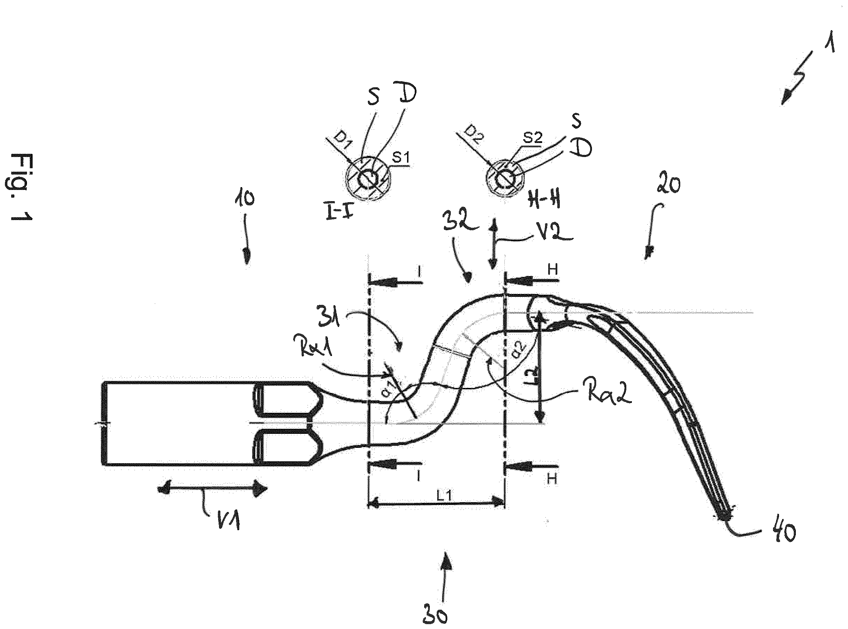

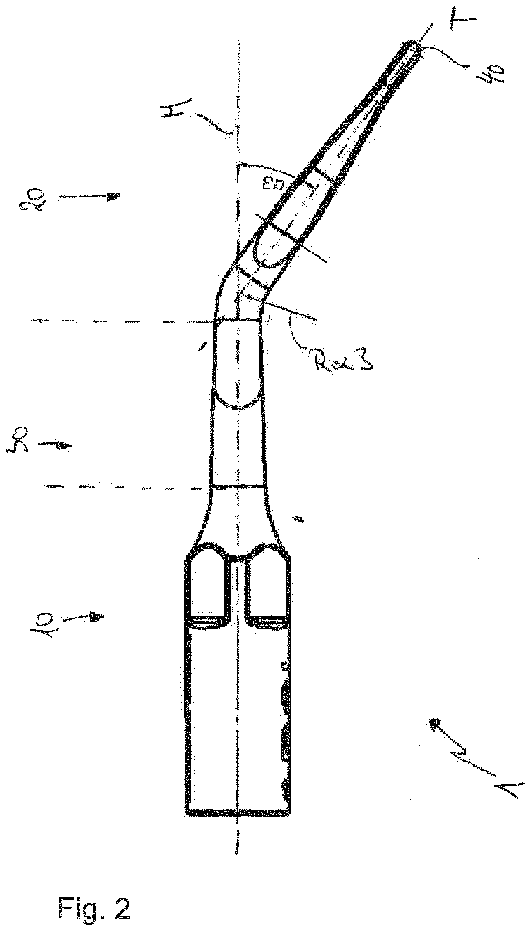

In the Figures 1 and 2 a tip element 1 according to a preferred embodiment of the present invention is shown. For example, the tip element 1 is a scaling tip, i. e. tip element 1 that is used to clean teeth by scaling. Preferably, during its utilization the tip element 1 is reversibly attached to a hand piece (not shown) and, in particular, in the mounted state the hand piece and the tip element 1 form a medical instrument, preferably a dental instrument. In particular, the tip element 1 and the hand piece are connected to each other via corresponding interfaces being respectively assigned to the hand piece and the tip element 1.

For removing tartar, calculus and/or plaque from the teeth the hand piece having the tip element 1 is led to the teeth such that the tip element 1 comes into contact with the surface of the teeth. Preferably, the hand piece comprises an activator unit for activating a movement, in particular an ultrasonic movement, of the tip element 1 connected to the hand piece. This ultrasonic movement supports removing spots, plaque and/or dentine tartar. The tip element 1 might be used in subgingival or supragingival treatments.

In particular, the tip element 1 comprises a first end section 10 and a second end section 20 being opposite to the first end section 10 along a course of the tip element 1. The first proximal end section 10 is configured for being attached to the hand piece, for example by plugging in the tip element 1 into a corresponding recess of the hand piece. In its utilization the activator unit transfers or induces an ultrasonic vibration to the first end section 10 causing an ultrasonic vibration along a first vibration direction V1. For example, the activator unit comprises a piezo transducer for realizing such an ultrasonic movement. The hand piece might further comprise a cooling unit, such a cooling circuit including a water inlet and/or outlet, for cooling the hand piece during its operation.

The second distal end section 20 forms a tool that is preferably in contact with the teeth during utilization of the tip element 1. In the present embodiment of figure 1, it is provided that the second end section 20 tapers along the course or the tip element 1 for forming a pointed tip 40 at its front side being faced to the teeth during its utilization.

To modify an amplitude of the ultrasonic vibration, in particular at the pointed end 40 of the tip element 1 in the second end section 20, a geometry of the tip element 1 is adapted correspondingly. In particular, a motion transformation section 30 is provided between the first end section 10 and the second end section 20. The motion transformation section 30 preferably is S-shaped and includes a first bended subsection 31 and a second bended subsection 32. Preferably, the second bended subsection 32 directly follows the first bended subsection 31 along the course of the tip element 1. In particular, the tip element 1 is bended in the first subsection 31 about a first angle $\alpha$1 and in the second bended subsection 32 about a second angle $\alpha$2, wherein a difference between the first angle $\alpha$1 and the second angle $\alpha$2 is smaller than 15°, more preferably smaller than 5° and most preferably smaller than 2°. Especially, the first bended subsection 31 and the second bended subsection 32 are bended in opposite direction for forming an S-like geometry.

Furthermore, the first angle $\alpha$1 and/or the second angle $\alpha$2 is/are between 85° and 125° and most probably between 90° and 100° or is even mainly 90°. In particular, the course of the tip element 1 in the first bended subsection 31 mainly changes its direction about 90°. As a consequence, it is possible to block the ultrasonic vibration having the first vibration direction V1 and to transfer the ultrasonic vibration having a first vibration direction V1 in the first end section 10 of the tip element 1 into an ultrasonic vibration having a second vibration direction V2 at the end of the motion transformation section 30, wherein the second vibration direction V2 mainly extends perpendicularly to the first vibration direction V1. Thus, a motion transformation can be realized. In particular, an ultrasonic vibration parallel to the course of the tip element 1, i. e. a backward - forward movement, is transferred to an ultrasonic vibration perpendicular to the course of the tip element 1, i. e. to an up-and -down movement of the tip element 1 at the end of the motion transformation section 30.

Actually, a first radius of curvature R$\alpha$1 can be assigned to the first bended subsection 31, wherein the radius of curvature R$\alpha$1 satisfies

$$\frac{D1}{2} < R\alpha1 < 2 \cdot D1,$$

wherein D1 is in the range between 1.2 and 4 mm and corresponds to the length of the cover and core region of the tip element in a first cross section. The same applies to a second radius of curvature R$\alpha$2 that can be assigned to the second bended subsection 32.

Moreover, it is preferably provided that the motion transformation section 30 extends about a first length L1 measured in a direction parallel to the first vibration direction V1. Due to the form of the first bended subsection 31 and second bended subsection 32, the course of the tip element 1 behind the second bended subsection 32 is laterally or radially shifted to the course of the tip element 1 in front of the first bended subsection 31 (seen in a direction from the first end section 10 to the second end section 20). Preferably, a second length L2 is assigned to the radial shift caused by the motion transformation sector 30.

By choosing a certain ratio between the first length L1 and the second length L2 it is advantageously possible to modify the amplitude of the ultrasonic vibration. For example, the amplitude is amplified, if the second length L2 is smaller than the first length L1, and the amplitude is reduced, if the second length L2 is bigger than the first length L1. Especially, the first length L1 and the second length L2 form axes of an elliptic resonator. The amplitude mainly remains constant, if the second length L2 is equal to the first length L1. In this case, the first length L1 and the second length L2 represent a radius of a circle.

Furthermore, the tip element 1 has a core region D and a cover region S, wherein in a first cross section I-I perpendicular to the course of the tip element 1 the core region D is surrounded by the cover region S, preferably completely surrounded in the first cross section I-I. Preferably the core region is cylindrical and forms a channel for transporting a liquid stream, preferably water. By modifying a dimension of the cover region S along its course in the motion transformation section 30, it is advantageously possible to adapt the amplitude of the ultrasonic vibration. This can be done in addition to the modification of the amplitude by the ratio of the first length L1 and the second length L2. In particular, the cover region S has a first cross-section area S1 in the first cross section I-I perpendicular to the course of the tip element 1 and a second cross-section area S2 in a second cross section H-H perpendicular to the course of the tip element 1. Preferably, the first cross-section area S1 is assigned to a beginning of the motion transformation section 30 and the second cross-section area S2 to an ending of the motion transformation section 30. Thereby, the beginning of the motion transformation section 30 is preferably defined by the last cross section (seen in a direction from the first end section 10 to the second end section 20) of the tip element 1 perpendicular to the course of the tip element 1 that is perpendicular to the first vibration direction V1. The ending of the motion transformation section 30 is preferably defined by the cross section perpendicular to the course of the tip element 1, wherein said cross section (seen in a direction from the first end section 10 to the second end section 20)

-   follows the first bended subsection 31 and second bended subsection 32 and
-   is again perpendicular to the first vibration direction V1 for the first time behind the first bended subsection 31 and the second bended subsection 32.

Furthermore, a first length D1 is assigned to the cover S and core region D in the first cross section I-I and a second length D2 is assigned to the cover S and core region D in the second cross section H-H. When the cover region S and the core region D are cylindrical, both D1 and D2 represent the diameter of the core region plus the cover region. The diameter of the core region is preferably constant along the tip element.

By choosing the second cross-section area S2 of the cover region S smaller than the first cross-section area S1, it is advantageously possible to amplify the amplitude of the ultrasonic vibration. Alternatively, it is possible to maintain the amplitude by choosing the second cross-section area S2 equal to the first cross-section area S1 or to decrease the amplitude by choosing the second cross-section area S2 bigger than the first cross-section area S1.

Preferably, the cover section S has a conical, exponential and/or stepped shape along the course of the tip element 1 in the motion transformation section 30.

Figure 2 shows the tip element 1 in a perspective view parallel to a main plane M including the first bended subsection 31 and the second bended subsection 32. As a consequence of this perspective, the double bended structure of the motion transformation section 30 cannot be observed in this illustration. In the embodiment shown in Figure 2 the second end section 20 of the tip element 1 is bended into a tilted direction T relative to the main plane M, including the first bended subsection 31 and the second subsection 32, about a third angle $\alpha 3$, wherein the third angle $\alpha 3$ is 35° in the shown embodiment. Due to the bending about the third angle $\alpha 3$, at least a part of the second end section 20 extends along the tilted direction T for performing a planar flexural motion during utilization of the tip element 1. The third angle $\alpha 3$ or a corresponding third radius of curvature $R\alpha 3$ depends on a planned application of the tip element 1, in particular a region of the mouth the tip element 1 is intended for.

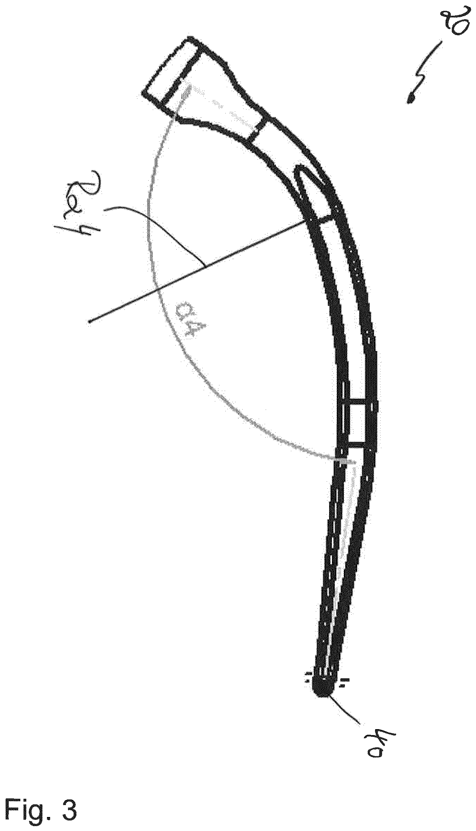

Figure 3 shows the second end section 20 of the tip element 1 illustrated in the figures 1 and 2. Especially, the part of the second end section 20, extending along the tilted direction T, is bended about a fourth angle $\alpha 4$ and forms a plane including the tilted direction T. The fourth angle $\alpha 4$ or a corresponding fourth radius of curvature $R\alpha 4$ is adapted depending on surfaces to access and preferably ranges between 90° and 135°, more preferably ranges between 110° and 120° and most preferably is mainly 117°. Preferably, a bend of the course of the second end section 20 about the third angle $\alpha 3$ is perpendicular to a bend of the course of the second end section 20 about a fourth angle $\alpha 4$.

In addition to the motion transformation section 30, the geometry of the application part of the tip element (section 20) has a significant influence on the direction of the vibration. To ensure the correct orientation, an anti-axisymmetric structure is retained to limit hammering motions that may be introduced by parasitic motions when the ultrasonic vibration is not controlled. The anti-axisymmetric structure gives a preferential direction to the vibration by filtering parasitic motions thanks to a specific quadratic moment, i.e. selective stiffness, and select only the vibration on the rerouted direction.

Reference signs:

| | |
|---|---|
| 1 | tip element |
| 10 | first end section |
| 20 | second end section |
| 30 | motion transformation section |
| 31 | first bended subsection |
| 32 | second bended subsection |
| 40 | pointed tip |
| V1 | first vibration direction |
| V2 | second vibration direction |
| $\alpha 1$ | first angle |
| $\alpha 2$ | second angle |
| $\alpha 3$ | third angle |
| $\alpha 4$ | fourth angle |
| I-I | first cross section |
| H-H | second cross section |
| L1 | first length |
| L2 | second length |
| S | core region |
| D | cover region |
| S1 | first cross-section area |
| S2 | second cross-section area |
| D1 | first further length |
| D2 | second further length |
| $R\alpha 1$ | first radius of curvature |
| $R\alpha 2$ | second radius of curvature |
| $R\alpha 3$ | third radius of curvature |
| $R\alpha 4$ | fourth radius of curvature |
| M | main plane |
| T | tilted direction |

**Claims**

1. A tip element (1) preferably for a dental treatment device, in particular a scaler, wherein the tip element (1) performs an ultrasonic vibration during its utilization, comprising

   - a first end section (10) for reversibly attaching the tip element (1) to a hand piece,
   - a second end section (20), forming a dental tool, wherein the second end section (20) tapers to a pointed end and
   - a motion transformation section (30) arranged between the first end section (10) and the second end section (20),
   wherein, for transforming an ultrasonic vibration having a first vibration direction (V1) to an ultrasonic vibration having a second vibration direction (V2), the motion transformation section (30) has a first bended subsection (31) and a second bended subsection (32), wherein a course of the tip element (1) is bended
   - about a first angle ($\alpha 1$) in the first bended subsection (31) and
- about a second angle ($\alpha2$) in the second bended subsection (32), wherein a difference between the first angle ($\alpha1$) and the second angle ($\alpha2$) is smaller than 15°, **characterized in that** the first angle ($\alpha1$) and/or the second angle ($\alpha2$) are between 85° and 125°.

2. The tip element (1) according to claim 1, wherein a difference between the first angle ($\alpha1$) and the second angle ($\alpha2$) is smaller than 5° and more preferably smaller than 2.5°.

3. The tip element (1) according to claim 2, wherein the first angle ($\alpha1$) and/or the second angle ($\alpha2$) are between 90° and 100° or is even mainly 90°.

4. The tip element (1) according to one of the preceding claims, wherein a first radius $R\alpha1$ of curvature, satisfying

$$\frac{D1}{2} < R\alpha1 < 2 \cdot D1,$$

is assigned to the first bended subsection (31), wherein a diameter $D1$ is in the range between 1.2 and 4 mm.

5. The tip element (1) according to one of the preceding claims, wherein the motion transformation section (30) has a first length (L1) and the course of the tip element (1) in the motion transformation section (30) causes a lateral shift having a second length (L2), wherein the first length (L1) is longer than the second length (L2).

6. The tip element (1) according to claim 5, wherein the first length (L1) and/or the second length (L2) is in a range between 3 and 8 mm.

7. The tip element (1) according to one of the preceding claims, wherein the tip element (1) has a core region (D) and a cover region (S), wherein the cover region (S) surrounds the core region (D), wherein along the course of the tip element (1) the cover region (S) modifies its extension in a direction perpendicular to the course of the tip element (S), in particular in the motion transformation section (30).

8. The tip element (1) according to claim 7, wherein in the motion transformation section (30) the cover region (S) has a first cross-section area (S1) in a first cross section (I-I) perpendicular to the course of the tip element (1), in particular measured at a beginning of the motion transformation section (30), and a second cross-section area (S2) in a second cross section (H-H) perpendicular to the course of the tip element (1) in the motion transformation section (30), in particular measured at an ending of the motion transformation section (30), wherein the first cross-section area (S1) is bigger than the second cross-section area (S2).

9. The tip element (1) according to claim 7 or 8, wherein the cover region (S) has a conical, stepped and/or exponential shape along the course of the tip element (1), in particular in the motion transformation section (30).

10. The tip element (1) according to one of the preceding claims, wherein in the second end section (20) the course of the tip element (1) is bended in a tilted direction (T) about a third angle ($\alpha3$) relative to a main plane (M) including the first bended subsection (31) and the second bended subsection (32), wherein the third angle ($\alpha3$) is between -75° and +75°, preferable between -35° and 35° or about 0°.

11. The tip element (1) according to one of the preceding claims, wherein in the second end section (20) the course of the tip element (1) is bended about a fourth angle ($\alpha4$) in a plane including a part of the second end section (20) extending in the tilted direction (T).

12. The tip element (1) according to claim 5 wherein the first length (L1) is equal or smaller than the second length (L2) and/or accroding to claim 8 wherein the first cross-section area (S1) is equal or smaller than the second cross-section area (S2).

13. A motion transformation section (30) as defined in one of the preceding claims for a tip element (1) accroding to one of the preceding claims.

14. A dental treatment device including a tip element (1) according to one of the claims 1 to 12.

15. A tip card device for checking a status of a tip element (1) according to one of the claims 1 to 12, comprising a holding element for arranging the tip element (1) in a fixed orientation relative to a projection area, said tip card device being configured to check whether the motion transformation section (30) of the tip element (1) according to one of the claims 1 to 12 has been deformed during its utilization to inform the user whether he needs to replace the tip element (1).

**Patentansprüche**

1. Spitzenelement (1) vorzugsweise für ein zahnärztliches Behandlungsgerät, insbesondere ein Scaler, wobei das Spitzenelement (1) bei seiner Verwendung eine Ultraschallschwingung ausführt, umfassend

- einen ersten Endabschnitt (10) zum reversiblen Befestigen des Spitzenelements (1) an einem Handstück,

- einen zweiten Endabschnitt (20), der ein zahnärztliches Werkzeug bildet, wobei sich der zweite Endabschnitt (20) zu einem spitzen Ende hin verjüngt, und

- einen Bewegungstransformationsabschnitt (30), der zwischen dem ersten Endabschnitt (10) und dem zweiten Endabschnitt (20) angeordnet ist, wobei der Bewegungstransformationsabschnitt (30), zur Umwandlung einer Ultraschallschwingung mit einer ersten Schwingungsrichtung (V1) in eine Ultraschallschwingung mit einer zweiten Schwingungsrichtung (V2), einen ersten gekrümmten Teilabschnitt (31) und einen zweiten gekrümmten Teilabschnitt (32) aufweist, wobei ein Verlauf des Spitzenelements (1) gekrümmt ist

- um einen ersten Winkel (α1) in dem ersten gekrümmten Teilabschnitt (31) und

- um einen zweiten Winkel (α2) in dem zweiten gekrümmten Teilabschnitt (32),

wobei eine Differenz zwischen dem ersten Winkel (α1) und dem zweiten Winkel (α2) kleiner als 15° ist, **dadurch gekennzeichnet, dass** der erste Winkel (α1) und/oder der zweite Winkel (α2) zwischen 85° und 125° liegen.

2. Spitzenelement (1) nach Anspruch 1, wobei eine Differenz zwischen dem ersten Winkel (α1) und dem zweiten Winkel (α2) kleiner als 5° und bevorzugt kleiner als 2,5° ist.

3. Spitzenelement (1) nach Anspruch 2, wobei der erste Winkel (α1) und/oder der zweite Winkel (α2) zwischen 90° und 100° liegt oder sogar überwiegend 90° beträgt.

4. Spitzenelement (1) nach einem der vorhergehenden Ansprüche, wobei dem ersten gekrümmten Teilabschnitt (31) ein erster Krümmungsradius $R\alpha1$, der

$$\frac{D1}{2} < R\alpha1 < 2 \cdot D1,$$

genügt, zugeordnet ist, wobei ein Durchmesser $D$1 im Bereich zwischen 1,2 und 4 mm liegt.

5. Spitzenelement (1) nach einem der vorhergehenden Ansprüche, wobei der Bewegungstransformationsabschnitt (30) eine erste Länge (L1) aufweist und der Verlauf des Spitzenelements (1) in dem Bewegungstransformationsabschnitt (30) eine seitliche Verschiebung mit einer zweiten Länge (L2) bewirkt, wobei die erste Länge (L1) länger ist als die zweite Länge (L2).

6. Spitzenelement (1) nach Anspruch 5, wobei die erste Länge (L1) und/oder die zweite Länge (L2) in einem Bereich zwischen 3 und 8 mm liegt.

7. Spitzenelement (1) nach einem der vorhergehenden Ansprüche, wobei das Spitzenelement (1) einen Kernbereich (D) und einen Abdeckbereich (S) aufweist, wobei der Abdeckbereich (S) den Kernbereich (D) umgibt, wobei der Abdeckbereich (S) entlang des Verlaufs des Spitzenelements (1) seine Ausdehnung in einer Richtung senkrecht zum Verlauf des Spitzenelements (S) verändert, insbesondere im Bewegungstransformationsabschnitt (30).

8. Spitzenelement (1) nach Anspruch 7, wobei der Abdeckbereich (S) im Bewegungstransformationsabschnitt (30) eine erste Querschnittsfläche (S1) in einem ersten Querschnitt (I-I) senkrecht zum Verlauf des Spitzenelements (1), insbesondere gemessen an einem Anfang des Bewegungstransformationsabschnitts (30), aufweist und eine zweite Querschnittsfläche (S2) in einem zweiten Querschnitt (H-H) senkrecht zum Verlauf des Spitzenelements (1) im Bewegungstransformationsabschnitt (30), insbesondere gemessen an einem Ende des Bewegungstransformationsabschnitts (30), aufweist, wobei die erste Querschnittsfläche (S1) größer ist als die zweite Querschnittsfläche (S2).

9. Spitzenelement (1) nach Anspruch 7 oder 8, wobei der Abdeckbereich (S) entlang des Verlaufs des Spitzenelements (1), insbesondere im Bewegungstransformationsabschnitt (30), eine konische, gestufte und/oder exponentielle Form aufweist.

10. Spitzenelement (1) nach einem der vorhergehenden Ansprüche, wobei im zweiten Endabschnitt (20) der Verlauf des Spitzenelements (1) in einer gekippten Richtung (T) um einen dritten Winkel (α3) relativ zu einer den ersten gekrümmten Teilabschnitt (31) und den zweiten gekrümmten Teilabschnitt (32) einschließenden Hauptebene (M) gekrümmt ist, wobei der dritte Winkel (α3) zwischen -75° und +75°, vorzugsweise zwischen -35° und 35° oder ungefähr 0° beträgt.

11. Spitzenelement (1) nach einem der vorhergehenden Ansprüche, wobei im zweiten Endabschnitt (20) der Verlauf des Spitzenelements (1) um einen vierten Winkel (α4) in einer Ebene gebogen ist, die einen Teil des zweiten Endabschnitts (20) einschließt, der sich in der gekippten Richtung (T) erstreckt.

12. Spitzenelement (1) nach Anspruch 5, wobei die erste Länge (L1) gleich oder kleiner ist als die zweite Länge (L2) und/oder nach Anspruch 8, wobei die erste Querschnittsfläche (S1) gleich oder kleiner als die zweite Querschnittsfläche (S2) ist.

**13.** Bewegungstransformationsabschnitt (30), wie in einem der vorhergehenden Ansprüche definiert, für ein Spitzenelement (1) nach einem der vorhergehenden Ansprüche.

**14.** Zahnärztliches Behandlungsgerät mit einem Spitzenelement (1) nach einem der Ansprüche 1 bis 12.

**15.** Spitzenkartenvorrichtung zur Überprüfung eines Zustands eines Spitzenelements (1) nach einem der Ansprüche 1 bis 12 umfassend ein Halteelement zum Anordnen des Spitzenelements (1) in einer festen Orientierung relativ zu einer Projektionsfläche, wobei die Spitzenkartenvorrichtung dazu konfiguriert ist, zu überprüfen, ob der Bewegungstransformationsabschnitt (30) des Spitzenelements (1) nach einem der Ansprüche 1 bis 12 während seines Gebrauchs verformt worden ist, um den Nutzer zu informieren, ob er das Spitzenelement ersetzen muss.

**Revendications**

**1.** Élément d'extrémité (1) de préférence pour un dispositif de traitement dentaire, en particulier un détartreur, dans lequel l'élément d'extrémité (1) exécute des vibrations ultrasonores pendant son utilisation, comprenant

- une première portion terminale (10) destinée à attacher l'élément d'extrémité (1) de façon réversible sur une pièce à main,
- une seconde portion terminale (20), formant un outil dentaire, dans laquelle la seconde portion terminale (20) est effilée jusqu'à une extrémité pointue, et
- une portion de transformation de mouvement (30) agencée entre la première portion terminale (10) et la seconde portion terminale (20),
dans lequel, pour transformer des vibrations ultrasonores ayant une première direction de vibration (V1) en vibrations ultrasonores ayant une seconde direction de vibration (V2), la section de transformation de mouvement (30) comporte une première sous-portion cintrée (31) et une seconde sous-portion cintrée (32), de sorte qu'un tracé de l'élément d'extrémité (1) est cintré
- sur un premier angle ($\alpha$1) dans la première sous-portion cintrée (31), et
- sur un second angle ($\alpha$2) dans la seconde sous-portion cintrée (32), et une différence entre le premier angle ($\alpha$1) et le second angle ($\alpha$2) est plus petite que 15°,
**caractérisé en ce que** le premier angle ($\alpha$1) et/ou le second angle ($\alpha$2) sont entre 85° et 125°.

**2.** Élément d'extrémité (1) selon la revendication 1, dans laquelle une différence entre le premier angle ($\alpha$1) et le second angle ($\alpha$2) est plus petite que 5° et de façon plus préférée plus petite que 2,5°.

**3.** Élément d'extrémité (1) selon la revendication 2, dans lequel le premier angle ($\alpha$1) et/ou le second angle ($\alpha$2) sont entre 90° et 100°, ou même principalement 90°.

**4.** Élément d'extrémité (1) selon l'une des revendications précédentes, dans lequel un premier rayon de courbure R$\alpha$1, satisfaisant les relations

$$\frac{D1}{2} < R\alpha1 < 2 \cdot D1,$$

est attribué à la première sous-portion cintrée (31), dans lequel un diamètre D1 est dans une plage entre 1,2 et 4 mm.

**5.** Élément d'extrémité (1) selon l'une des revendications précédentes, dans lequel la portion de transformation de mouvement (30) a une première longueur (L1) et le tracé de l'élément d'extrémité (1) dans la portion de transformation de mouvement (30) entraîne un décalage latéral ayant une seconde longueur (L2), dans lequel la première longueur (L1) est plus longue que la seconde longueur (L2).

**6.** Élément d'extrémité (1) selon la revendication 5, dans lequel la première longueur (L1) et/ou la seconde longueur (L2) est dans une plage entre 3 et 8 mm.

**7.** Élément d'extrémité (1) selon l'une des revendications précédentes, dans lequel l'élément d'extrémité (1) a une région de cœur (D) et une région de couverture (S), dans lequel la région de couverture (S) entoure la région de cœur (D), dans lequel le long du tracé de l'élément d'extrémité (1) la région de couverture (S) modifie son extension dans une direction perpendiculaire au tracé de l'élément d'extrémité (1), en particulier dans la portion de transformation de mouvement (30).

**8.** Élément d'extrémité (1) selon la revendication 7, dans lequel dans la portion de transformation de mouvement (30) la région de couverture (S) a une première superficie de section transversale (S1) dans une première section transversale (I-I) perpendiculaire au tracé de l'élément d'extrémité (1), en particulier mesurée au niveau d'un début de la portion de transformation de mouvement (30), et une seconde superficie de section transversale (S2) dans une seconde section transversale (H-H) perpendiculaire au tracé de l'élément d'extrémité (a) dans la portion de transformation de mouvement (30), en particulier mesurée au niveau d'une terminaison de la portion de transformation de mouvement (30), dans lequel la première superficie de section transversale (S1) est plus grande que la seconde superficie de section transversale (S2).

9. Élément d'extrémité (1) selon la revendication 7 ou 8, dans lequel la région de couverture (S) a une forme conique, en gradins et/ou exponentielle le long du tracé de l'élément d'extrémité (1), en particulier dans la portion de transformation de mouvement (30).

10. Élément d'extrémité (1) selon l'une des revendications précédentes, dans lequel, dans la seconde portion terminale (20) le tracé de l'élément d'extrémité (1) est cintré dans une direction inclinée (T) sur un troisième angle ($\alpha$3) relativement à un plan principal (M) incluant la première sous-portion cintrée (31) et la seconde sous-portion cintrée (32), dans lequel le troisième angle ($\alpha$3) est entre - 75° et +75°, de préférence entre 35° et environ 0°.

11. Élément d'extrémité (1) selon l'une des revendications précédentes, dans lequel dans la seconde portion terminale (20) le tracé de l'élément d'extrémité (1) est cintré sur un quatrième angle ($\alpha$4) dans un plan incluant une partie de la seconde portion terminale (20) s'étendant dans la direction inclinée (T).

12. Élément d'extrémité (1) selon la revendication 5 dans lequel la première longueur (L1) est égale ou inférieure à la seconde longueur (L2) et/ou selon la revendication 8 dans lequel la première superficie de section transversale (S1) est égale ou inférieure à la seconde superficie de section transversale (S2).

13. Portion de transformation de mouvement (30) telle que définie dans l'une des revendications précédentes pour un élément d'extrémité (1) selon l'une des revendications précédentes.

14. Dispositif de traitement dentaire incluant un élément d'extrémité (1) en accord avec l'une des revendications 1 à 12.

15. Dispositif à carte d'extrémité pour vérifier un état d'un élément d'extrémité (1) selon l'une des revendications 1 à 12, comprenant un élément de maintien pour agencer l'élément d'extrémité (1) dans une orientation fixe relativement à une zone en projection, ledit dispositif à carte d'extrémité étant configuré pour vérifier si la portion de transformation de mouvement (30) de l'élément d'extrémité (1) selon l'une des revendications 1 à 12 a été déformée pendant son utilisation afin d'informer l'utilisateur s'il a besoin de remplacer l'élément d'extrémité (1).

Fig. 1

EP 3 705 083 B1

Fig. 2

EP 3 705 083 B1

Fig. 3

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4238384 C1
- US 20160081764 A1
- CN 204909697 U
- US 2015245884 A1
- US 5899693 A
- US 2018140403 A1